# EUROPEAN PATENT APPLICATION

(11) **EP 4 769 190 A1**
(43) Date of publication of application: **01.07.2026**
(21) Application number: 25178359.3
(22) Date of filing: 22.05.2025
(51) Int. Cl.: G06F 21/53, G06F 21/57

(54) **IMPROVED SECURITY FOR CLOUD PLATFORMS**

(30) Priority: 30.12.2024 GR 20240100929
(71) Applicant: British Telecommunications Public Limited Company, London E1 8EE (GB)
(72) Inventor: EL-MOUSSA, Fadi, London, E1 8EE (GB); ANTONIOU, Konstantinos, London, E1 8EE (GB)
(74) Representative: British Telecommunications public limited company Intellectual Property Department

(57) **Abstract**

There is herein described a method of running an application on a cloud platform, the method comprising transmitting a syscall from the application to the cloud platform, performing a comparison of a risk indicator associated with the syscall to a risk tolerance threshold associated with the cloud platform, where the risk indicator is a measure of a level of risk presented by the syscall and the risk tolerance threshold is a measure of a maximum level of risk acceptable to the cloud platform, allowing or preventing the syscall from being processed by the cloud platform depending on an outcome of the comparison.

## Description

In the Cloud Native approach of software application development and deployment, an application is deployed on cloud computing via various technologies. Often, cloud native applications utilise containers as the base technology in their architecture stack. The reason is that with containers the developers have the ability to package all software required to execute the application into a single executable package. Containers are practically fully functional and portable computing environments, within which applications can be deployed. Containers run in virtualised environments thus their contained applications are independent and isolated from other environments. A contained application's processes run isolated from other applications', by defining and bundling the necessary configuration files, libraries and other dependencies in its container. Multiple containers can operate over the same cloud platform and different permissions can be configured per container.

Containers run processes that are isolated from other containers but are visible from the host cloud platform. From the host cloud platform point of view regular and containerised applications need permissions and privileges to access its services. The way all applications request services from the operating system is via programmatic interfaces called System Calls or syscalls. Usually, application developers will not need to define the syscalls that their application will make to the cloud platform kernel in order to perform an action. Such a decision is made by the cloud platform based on the user space code that comprises the application.

The container acts as a security boundary between the user/application and the cloud platform by restricting access to files and processes outside the container unless it has explicitly been given permission. However, certain unsafe syscalls allow container applications to access resources that they shouldn't, opening the whole system to threats like remote code execution within a container, or threat actors gaining root privileges on the host, or compromising of other containers in multitenancy scenarios. This can happen for multiple reasons:
- the application code is vulnerable,
- the container is badly configured,
- the machine that builds the container has been compromised,
- the stored images have been replaced by an attacker,
- the cloud platform is vulnerable,
- or the container runtime is vulnerable.

To combat such issues a lot of configuration approaches exist, such as limiting access to the bare minimum resources or privileges that a user/application require to operate properly, dividing the architecture into multiple separate components or segregating of duties between users.

It would be desirable to overcome and/or substantially mitigate some or all of the above-mentioned and/or other disadvantages of the prior art.

According to a first aspect of the invention there is provided a method of running an application on a cloud platform, the method comprising:
Transmitting a syscall from the application to the cloud platform;
Performing a comparison of a risk indicator associated with the syscall to a risk tolerance threshold associated with the cloud platform, where the risk indicator is a measure of a level of risk presented by the syscall and the risk tolerance threshold is a measure of a maximum level of risk acceptable to the cloud platform;
Allowing or preventing the syscall from being processed by the cloud platform depending on an outcome of the comparison.

The inventor has realised that the risk presented by some applications, while non-zero, is small enough to be acceptable to some cloud platforms. Embodiments of the invention enable a process to be performed in which applications whose risk is small enough for the cloud platform are allowed to be processed. The syscall may be processed by an operating system on the cloud platform.

If the outcome of the comparison is that the risk indicator exceeds the risk tolerance threshold, the syscall may be prevented from being processed by the cloud platform. If the outcome of the comparison is that the risk indicator does not exceed the risk tolerance threshold, the syscall may be processed by the cloud platform.

The application may transmit the syscall to a kernel of an operating system of the cloud platform. The method may be performed in relation to one or more further syscalls. The method may be performed in relation to one or more further cloud platforms. The risk tolerance threshold associated with the one or more further cloud platforms may be different to the risk tolerance threshold associated with the cloud platform.

In embodiments in which the syscall is prevented from being processed by the cloud platform, the syscall may be (a) replaced with an alternative syscall; (b) modified; or (c) blocked from being processed by the cloud platform.

In embodiments in which the syscall is replaced with an alternative syscall, the syscall may be replaced by an alternative syscall with similar functionality but whose risk factor does not exceed the risk tolerance threshold. The method may comprise comparing the syscall to a list of syscalls whose risk factor does not exceed the risk tolerance threshold.

In embodiments in which the syscall is modified, the syscall may be modified such that the risk factor no longer exceeds the risk tolerance threshold. This may comprise modifying an argument of the syscall.

The risk indicator may be expressed numerically and may be expressed as a percentage. The risk tolerance threshold may be expressed numerically and may be expressed as a percentage. The risk indicator may be a risk factor.

The method may comprise performing a preliminary risk factor assignment stage. The preliminary risk factor assignment stage may comprise placing the application in a profiling environment, monitoring one or more syscalls transmitted by the application and assigning a risk indicator to the one or more syscalls.

The risk tolerance threshold may be obtained from a cloud access policy associated with the cloud platform. The syscall may be a read syscall or a write syscall. The syscall may contain a request to the cloud platform to obtain data from an entity external to the cloud platform.

The method may further comprise using an output of the comparison to create an application onboarding policy. The output of the comparison may be used to create a container in which the application is wrapped. The method may further comprise attaching the application onboarding policy to the container.

An embodiment of the invention will now be described in detail, for illustration only, with reference to the appended drawings, in which:
Fig 1 is a schematic view of a cloud platform for use in accordance with embodiments of the invention;
Fig 2 is a flow chart showing the method in accordance with the prior art;
Fig 3 is a flow chart showing the method in accordance with embodiments of the invention.

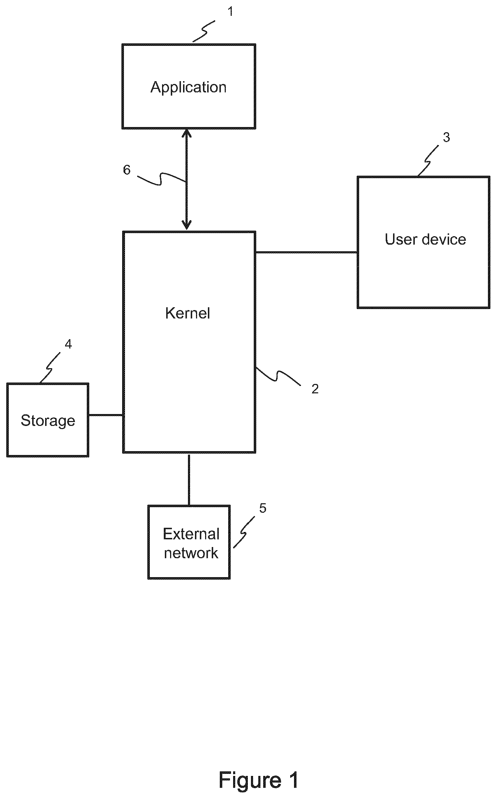

The present invention relates to applications that run on cloud infrastructure. A user desires a particular application to run on a cloud platform. Fig 1 is a schematic view of the cloud infrastructure. In particular, there is an application 1, which is communicatively connected to the kernel 2 of an operating system on the cloud platform. The application 1 is capable of sending and receiving syscalls to/from the kernel .

In use, user device 3 instructs application 1, via kernel 2 to run. This causes the application 1 to request services from the kernel 2 of the operating system of the cloud platform. These requests are programmatic interfaces called system calls (abbreviated in the art to 'syscalls'). A syscall may, for example, contain a request to obtain timing information from an untrusted address in external network 5. As the external network address is untrusted, the act of obtaining the timing information may allow malware to infect the cloud platform. Known systems address this problem as follows.

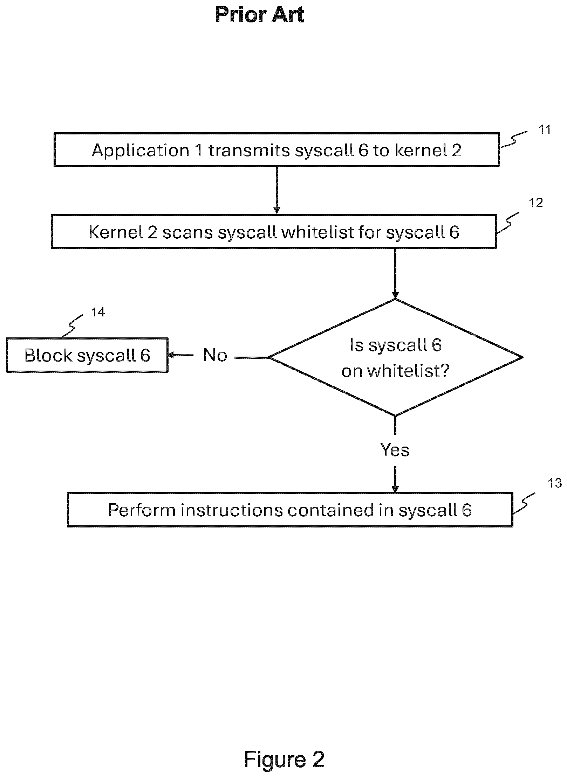

The application 1 transmits a syscall 6 to kernel 2. At kernel 2, the syscall 6 is compared to a whitelist of various syscall types that are acceptable to the cloud platform. If the syscall 6 is of a type contained in the whitelist, it is processed by the kernel 2. If not, it is blocked. This process is set out in the flow chart of Fig 2.

In particular, at step 11, the application 1 transmits syscall 6 to kernel 2. At step 12, the kernel 2 scans a syscall whitelist for syscall type which is the same as syscall 6. If a syscall type which is the same as syscall 6 is present in the whitelist, the process continues to step 13. In step 13, the kernel 2 performs the instructions contained in the syscall 6.

If instead, a syscall type which is the same as syscall 6 is not found to be present in the whitelist, the process proceeds to step 14. In step 14, syscall 6 is blocked.

An embodiment according to the invention will now be described. The application 1 sends several preliminary syscalls to kernel 2. These preliminary syscalls are monitored using ptraces and eBPF and stored in an SQL database. The syscalls and their corresponding parameters are extracted from the database and are serialised into a structured data format (e.g JSON or XML) called the Observed Operations List.

Each of the syscalls on the Observer Operations List are compare the cloud infrastructure's allowed security policy. Each syscall is then assigned a risk factor. The risk factor is expressed as a percentage and indicates the security risk to the cloud platform presented by the syscall.

The cloud platform has a Cloud Access Policy which sets out the operations and resources that it is allowed to access. The Cloud Access Policy's allowed operations and resources are each assigned a risk factor tolerance based on an assessment dataset provided by the process operator. The risk factor tolerance is expressed as a percentage and is the process operator's assessment of the risk associated with each of the allowed operations and resources, with 0% indicating no risk and 100% indicating maximum risk.

In embodiments of the invention, the Observed Operations List is compared to the Cloud Access Policy. In particular, each syscall on the Observed Operations List is compared to its corresponding one of the allowed operations and resources in the Cloud Access Policy. There are two possible outcomes of this comparison:
(i) the risk factor associated with a given syscall on the Observed Operations List does not exceed the cloud's risk factor tolerance. In this case the syscall is processed by the kernel 2.
(ii) the risk factor associated with a given syscall on the Observed Operations List exceeds the cloud's risk factor tolerance. In this case the syscall is prevented from being processed by the kernel 2.

In the case of outcome (ii), the functionality of the syscall is then compared to that of a list of other allowable syscalls. If the list contains an allowable syscall that offers similar functionality to the disallowed syscall, the kernel 2 processes that allowable syscall in its place. If there is no allowable syscall with similar functionality, the syscall is blocked.

For example, a syscall requiring timing information from an external network address is assessed as having a risk factor of 50%. If the cloud platform's risk factor tolerance is 35%, the syscall is prevented from being processed and is compared to a list of allowable syscalls with a view to finding an allowable syscall with similar functionality. If such an allowable syscall id found, that is processed in its place.

If no allowable syscall is found, then, if possible, the argument of the syscall is modified such that the risk factor of the syscall no longer exceeds the cloud's risk factor tolerance.

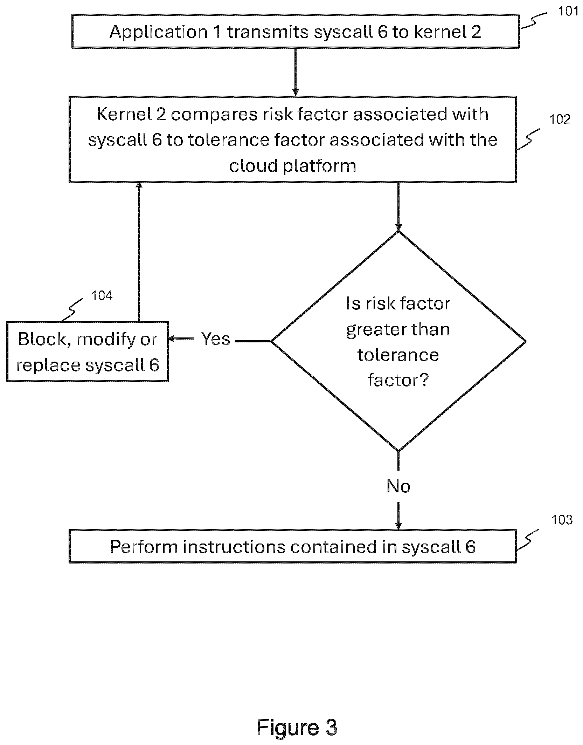

Fig 3 shows a flow chart of the method in accordance with embodiments of the invention.

In particular, at step 101, the application 1 transmits syscall 6 to kernel 2. At step 102, the kernel 2 compares the risk factor associated with syscall 6 to the tolerance factor associated with the cloud platform. If this comparison finds that the risk factor is not greater than the tolerance factor, the process proceeds to step 103. In step 103, the kernel 2 performs the instructions contained in the syscall 6.

If, instead, the comparison at step 102 finds that the risk factor is greater than the tolerance factor, the process proceeds to step 104. In step 104, syscall 6 is either blocked, or it is replaced or modified such that the risk factor is no longer greater than the tolerance factor. If the syscall 6 is modified, the process returns to step 102.

## Claims

1. A method of running an application on a cloud platform, the method comprising:
transmitting a syscall from the application to the cloud platform;
performing a comparison of a risk indicator associated with the syscall to a risk tolerance threshold associated with the cloud platform, where the risk indicator is a measure of a level of risk presented by the syscall and the risk tolerance threshold is a measure of a maximum level of risk acceptable to the cloud platform;
allowing or preventing the syscall from being processed by the cloud platform depending on an outcome of the comparison.

2. A method as claimed in claim 1, wherein, if the outcome of the comparison is that the risk indicator exceeds the risk tolerance threshold, the syscall is prevented from being processed by the cloud platform.

3. A method as claimed in claim 2, wherein the method further comprises replacing the syscall with an alternative syscall and processing the alternative syscall by the cloud platform.

4. A method as claimed in claim 3, wherein the alternative syscall has similar functionality to the syscall.

5. A method as claimed in claim 2, wherein the method further comprises modifying the syscall and processing the modified syscall by the cloud platform.

6. A method as claimed in claim 5, wherein the step of modifying the syscall comprises modifying an argument of the syscall, such that a risk factor associated with the modified syscall does not exceed the risk tolerance threshold.

7. A method as claimed in any preceding claim, wherein risk indicator may be expressed as a percentage.

8. A method as claimed in any preceding claim, wherein the risk tolerance threshold may be expressed as a percentage.

9. A method as claimed in any preceding claim, wherein the method comprises performing a preliminary risk factor assignment stage comprising placing the application in a profiling environment, monitoring one or more syscalls transmitted by the application and assigning a risk indicator to the one or more syscalls.

10. A computer program comprising instructions which, when the program is executed by a computer, cause the computer to carry out the steps of any of claims 1 to 9.

11. A computer-readable carrier medium comprising the computer program of claim 10.
